Europäisches Patentamt

European Patent Office

Office européen des brevets

(19)

(11) Veröffentlichungsnummer: **0 304 422**
**B1**

(12) ## EUROPÄISCHE PATENTSCHRIFT

(45) Veröffentlichungstag der Patentschrifft:
07.02.90

(21) Anmeldenummer: 87902506.2

(22) Anmeldetag: 23.04.87

(86) Internationale Anmeldenummer:
PCT/EP 87/00219

(87) Internationale Veröffentlichungsnummer:
WO 87/06669 (05.11.87 Gazette 87/24)

(51) Int. Cl. ⁵ : **F 16 H 61/12**

(54) **ELEKTRO-HYDRAULISCHE STEUERUNG.**

(30) Priorität: 02.05.86 PCT/EP86/00262

(43) Veröffentlichungstag der Anmeldung:
01.03.89 Patentblatt 89/09

(45) Bekanntmachung des Hinweises auf die Patenterteilung:
07.02.90 Patentblatt 90/06

(84) Bennante Vertragsstaaten:
DE FR GB SE

(56) Entgegenhaltungen:
EP-A-0 179 683
US-A-4 527 448

(73) Patentinhaber: ZAHNRADFABRIK FRIEDRICHSHAFEN AKTIENGESELLSCHAFT
Löwentaler Strasse 100 Postfach 2520
D-7990 Friedrichshafen 1 (DE)

(72) Erfinder: GIERER, Georg
Seestrasse 28
D-7993 Kressbronn (DE)

EP 0 304 422 B1

LIBERGRAF, STOCKHOLM 1990

2

## Beschreibung

Diese Erfindung betrifft eine elektro-hydraulische Steuerung für ein Automatgetriebe nach dem Oberbegriff von Anspruch 1.

Es sind elektro-hydraulische Steuerungen bekannt, insbesondere bei Getrieben mit nur einer Eingangswelle, wobei die Leistung aus dem Antriebsmotor über eine hydrodynamische Einheit geleitet wird und mit einer z. B. Wandlerkupplung diese überbrückt werden kann. Die Druck- und Schaltventile sind dabei so angeordnet, daß bei Ausfall der elektrischen Anlage eine Notfahrmöglichkeit gewährleistet ist. Das ist kein großes Problem; da ja der Antrieb in allen Gängen über die hydrodynamische Einheit erfolgt, ist es auch möglich anzuhalten und wieder anzufahren, ohne daß der Motor abgestellt werden muß oder abgewürgt wird.

Schwieriger hingegen sind die Probleme, wenn der Leistungsfluß nur bei einigen Gängen – z. B. Gang 1, 2 und R – über die hydrodynamische Einheit geleitet wird und z. B. der 4. Gang rein mechanisch übertragen und der 3. Gang in Leistungsteilung, also zum Teil rein mechanisch und zum Teil über die hydrodynamische Einheit, erfolgt.

Aus der EP-A-179 683 ist zwar eine elektrohydraulische Steuerung für ein Automatgetriebe mit zwei Getriebeeinganswellen bekannt mit dem auch bei Stromausfall eine Weiterfahrt möglich ist. Dabei wird durch die Umschaltung eines Magnetventils, in Verbindung mit der Umschaltung eines Steuerschiebers infolge des Stromausfalls von der leistungsverzweigten Fahrweise auf rein hydraulische Fahrweise über den Drehmomentwandler umgestellt. Es muß also eine Kupplung gelöst und eine weitere geschlossen werden. Während im Normalbetrieb eine solche Überschneidungsschaltung zum Schutz der Kupplungen mit viel Steueraufwand erfolgt, ist für den Notbetrieb dieser nicht vorgesehen und auch nicht möglich.

Es ist deshalb Aufgabe der Erfindung, eine elektro-hydraulische Steuerung für ein Getriebe mit 2 Eingangswellen nach dem Oberbegriff von Anspruch 1 so weiterzuentwickeln, daß bei einem Ausfall der Stromversorgung in einer angemessenen Geschwindigkeit ohne Umschaltung von Ventilen, weiter vorwärts gefahren werden kann und auch angehalten, wieder angefahren und rückwärts gefahren werden kann.

Diese Aufgabe wird mit den kennzeichnenden Merkmalen vom Anspruch 1 erfüllt.

Durch die Anordnung eines Notfahrventiles, wirkungsmäßig zwischen einem Magnetventil und den Schaltkupplungen einmal für den mechanischen Gang und einmal für den R-Gang, ist es möglich, diese Kupplungen über den Wählhebel auch beim Ausfall der Magnetventile zu betätigen. Es kann die im Normalbetrieb nur für den R-Gang vorgesehene Kupplung bei der Stellung des Wählschiebers in Vorwärtsfahrt auch für die Vorwärtsfahrt selbst in Verbindung mit der hydrodynamischen Einheit benutzt werden. Dadurch ist auch das Anfahren in Vorwärts- und Rückwärtsfahrt bei entsprechender Verstellung des Wählschiebers möglich. Mit den Ansprüchen 2 bis 6 wird die Erfindung in vorteilhafter Weise weiter ausgestaltet.

Bei einem Ausfall der Stromversorgung während der Vorwärtsfahrt ist es möglich, über den mechanischen Antrieb ca. 80 % der Höchstgeschwindigkeit zu erreichen, wenn das Notfahrventil als Halteventil ausgebildet ist, also auch ohne den vom Magnetventil kommenden Steuerdruck in der der Druckfeder entgegengerichteten Endstellung mit dem Systemdruck gehalten wird.

Im Notfahrzustand kann durch die vorteilhafte Anordnung der Anschlüsse im Notfahrventil in Verbindung mit der R-Gang-Kupplung sowohl im Vorwärtsfahrtbereich als auch in der Rückwärtsfahrtrichtung angefahren werden, und das nur allein mit der Verstellung des Wählschiebers, also ohne jede elektrische Beeinflussung.

Weitere Einzelheiten der Erfindung werden anhand von Zeichnungen und Ausführungsbeispielen erläutert. Es zeigen:

Fig. 1   ein Automatgetriebe in schematischer Darstellung;
Fig. 2   eine Tabelle über die eingeschalteten Kupplungen und Bremsen in den einzelnen Gängen;
Fig. 3   ein vereinfacht dargestelltes Steuerschema mit dem Notfahrventil.

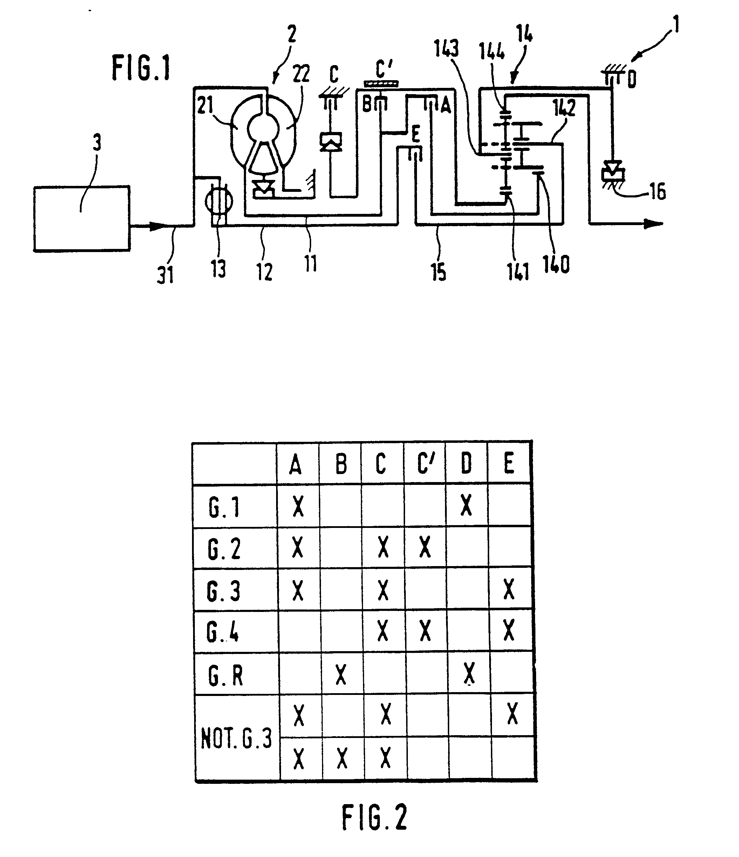

In Fig. 1 ist ein Antriebsmotor 3 über eine Abtriebswelle 31 einmal mit der Pumpe 22 einer hydrodynamischen Einheit 2 und zum anderen über einen Dämpfer 13 mit einer zweiten Getriebeeingangswelle 12 verbunden, an deren Ende eine Kupplung E angeordnet ist und über eine innere Welle 15 zu einem Steg 142 eines reduzierten Planetenkoppelgetriebes 14 führt. Die erste Getriebeeingangswelle 11 führt von der Turbine 21 der hydrodynamischen Einheit 2 zu den Kupplungen A und B, deren andere Hälfte mit je einem Sonnenrad 140, 141 des reduzierten Planetenkoppelgetriebes 14 verbunden ist. An der zweiten Hälfte der Kupplung B ist noch eine Bremse C' und über einen Freilauf eine weitere Bremse C angeordnet. Der zweite Steg 143 des reduzierten Planetenkoppelgetriebes 14 ist mit einem am Getriebegehäuse 16 abgestützten Freilauf 17 und einer Bremse D verbunden, und der Abtrieb aus dem Getriebe 1 erfolgt über das Hohlrad 144 des reduzierten Planetenkoppelgetriebes 14.

Aus der Tabelle nach Fig. 2 ist leicht ableitbar, daß im 1., 2. und R-Gang die Leistung aus dem Antriebsmotor 3 immer über die hydrodynamische Einheit 2 in das reduzierte Planetenkoppelgetriebe 14 geleitet wird. Im vierten Gang jedoch erfolgt die Leistungsübertragung über die Kupplung E und damit rein mechanisch, und im 3. Gang wird die Leistung geteilt, also anteilig über die hydrodynamische Einheit 2 und über die innere Welle 15 geleitet.

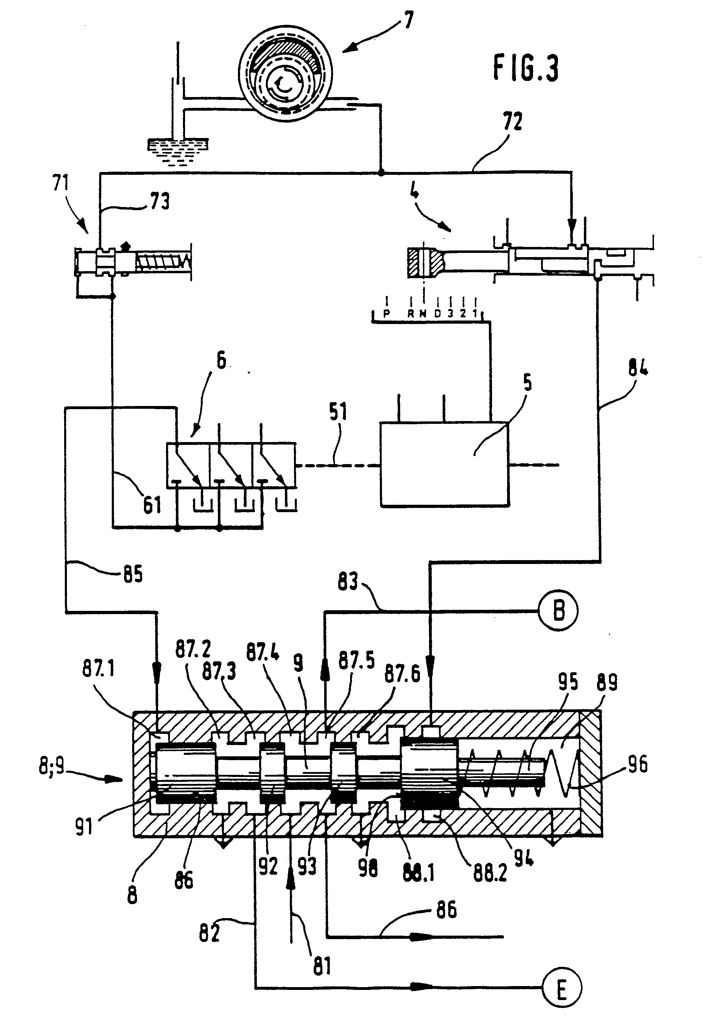

In dem reduziert dargestellten Steuerschema nach Fig. 3 ist das elektronische Steuergerät 5 mit dem Magnetventil 6 elektrisch verbunden. Ein von einer Druckmittelquelle 7 erzeugter Systemdruck wird einmal über die Leitung 72 zum Wählschieber 4 und über die Leitung 73 zum Druckreduzierventil 71 geleitet. Über die Leitung 61 wird dieser reduzierte Druck als Steuerdruck den Magnetventilen, z. B. Magnetventil 6, zugeführt. Das Notfahrventil 8/9 hat einen abgesetzten Kolbenschieber 9 mit 3 Steuerkolben 91, 92, 93 gleichen Durchmessers auf der eine Seite und einen Steuerkolben 94 mit einem größeren Durchmesser und einen Anschlagbolzen 95 auf der anderen Seite und ist in einem Gehäuse 8 mit einer abgesetzten zylindrischen Bohrung axial verschiebbar gelagert. Weiter sind Ringräume 87/1 bis 87/6 am kleineren Durchmesser der zylindrischen Bohrung und Ringräume 88/1 bis 88/2 an der großen Bohrung angeordnet. Eine Steuerdruckleitung 85 führt zum ersten auch stirnseitig angeordneten Ringraum 87/1 und eine Betätigungsdruckleitung (Systemdruck) 81 zum vierten Ringraum 87/4. Die vom Wählschieber 4 kommende Systemdruckleitung 84 führt in den Ringraum 88/2. Der fünfte Ringraum 87/5 ist über die Zuleitung 83 mit der Kupplung B, und der dritte Ringraum 87/3 über die Zuleitung 82 mit der Kupplung E verbunden. Eine Leitung 86 führt noch zu einem Zugventil (nicht gezeichnet), das bei der Beaufschlagung der Kupplung B gleichzeitig die Kupplung A (nicht dargestellt) verriegelt. Eine Feder 96 ist in der abgesetzten zylindrischen Bohrung mit dem großen Durchmesser (Federraum 89) angeordnet und stützt sich einmal an der Stirnseite dieser Bohrung und zum anderen am größeren Kolben 94 des abgesetzten Kolbenschiebers 9 ab. Die elektro-hydraulische Steuerung wirkt wie folgt. Bei Normalfahrt wird mit der Verstellung des Wählschiebers 4 von N nach z. B. D, also in Vorwärtsfahrt, das dritte Magnetventil 6 eingeschaltet. Dadurch wird über die Leitung 61/85 zum ersten äußeren Ringraum 87/1 ein Steuerdruck geleitet. Der abgesetzte Kolbenschieber 9 wird entgegen dem Druck der Feder 96 nach rechts bis zum Anschlag bewegt, so daß über den achten Ringraum 88/2 und die Leitung 84 Systemdruck dem Notfahrventil 8/9 zugeführt wird.

Dies geschieht im gesamten Vorwärtsfahrtbereich, weil der Wählschieber 4 so gestaltet ist, daß von der Druckmittelquelle 7 über die Leitung 72 bei einer Verstellung des Wählschiebers 4 in die Vorwärtsfahrtrichtung die Leitung 84 mit Systemdruck beaufschlagt wird. Über die Ringfläche 98 am großen Steuerkolben 94 wird dabei der abgesetzte Kolbenschieber 9 in der rechten Endlage festgehalten. In dieser Stellung wird über die Zuleitung 81 im Bereich des dritten und vierten Ganges und über den vierten Ringraum 87/4 Betätigungsmittel (Systemdruck) über den dritten Ringraum 87/3 und die Zuleitung 82 der Kupplung E zugeleitet. In dieser Stellung wird bei Vorwärtsfahrt immer die Kupplung E betätigt.

Bei Stromausfall verbleibt das Notfahrventil infolge der Haltefunktion über den Systemdruck aus Leitung 84 in dieser Stellung und die Kupplung E, die die zweite Getriebeeingangswelle 12 mit der inneren Welle 15 verbindet, bleibt geschlossen, so daß der mechanische Antriebsstrang bestehen bleibt und eine Fahrt im Bereich des dritten Ganges mit einer vollen Leistung weiterhin möglich ist. Ein Anfahren bei dieser Stellung des Notfahrventiles ist jedoch nicht möglich. Erfolgt der Stromausfall in der Position N, d. h. also in der Neutralstellung, z. B. im Stand des Fahrzeuges verbleibt beim Verschieben des Wählschiebers 4 von N nach D, weil kein Steuerstrom da ist, das Notfahrventil in der gezeichneten Stellung. Dabei wird über die Systemdruckleitung 81 die im Notfahrbetrieb immer Systemdruck führt, und die Zuleitung 83 die Kupplung B beaufschlagt, so daß die Leistung von dem Antriebsmotor 3 über die hydrodynamische Einheit 2 und die erste Getriebeeingangswelle 11 und die Kupplung B an das Sonnenrad 141 des reduzierten Planetenkoppelgetriebes 14 übertragen wird. In dieser Stellung kann auch in Vorwärts- und in Rückwärtsfahrtrichtung angefahren werden.

Eine Umschaltung von der Kupplung E, also der rein mechanischen Leistungsübertragung, auf die Kupplung B während der Vorwärtsfahrt ist durch die Umschaltung aus der Position D nach N und wieder nach D möglich, so daß damit die Fahrt über die hydrodynamische Einheit 2 ohne Unterbrechung fortgesetzt und auch jederzeit angehalten und wieder angefahren werden kann.

## Patentansprüche

1. Elektro-hydraulische Steuerung für ein Automatgetriebe (1) mit zwei Getriebeeingangswellen (11, 12), wobei die erste (11) mit der Turbine (21) einer hydrodynamischen Einheit, und die zweite (12) direkt mit der Antriebswelle (31) vom Antriebsmotors (3) verbunden ist und die Antriebsleistung gangabhängig einzeln oder auch in Leistungsteilung in das reduzierte Planetenkoppelgetriebe (14) eingeleitet wird, mit einem Wählschieber (4) zumindest für die Neutralstellung (N) sowie die Vorwärts- (D) und Rückwärtsfahrt (R) und einem elektronischen Steuergerät (5), mit Federkraft in Nullstellung gehaltenen Magnetventilen (6), einer Druckmittelquelle (7), Druck- und Schaltventilen und Dämpfern zum Betätigen von Gangschaltkupplungen und Bremsen (A – E), dadurch *gekennzeichnet,* daß im Wirkzusammenhang zwischen einem Magnetventil (6) und den Schaltkupplungen für den höchsten Gang (E) sowie dem Rückwärtsgang (B) zusätzlich ein Notfahrventil (8/9) angeordnet ist und beim Ausfall des Magnetventils (6) über einen vom Wählschieber (4) kommenden Systemdruck (Leitung 84), der auf eine Ringfläche (98) eines Kolbenschiebers (9) wirkt, in der geschalteten Stellung gehalten wird.

2. Elektro-hydraulische Steuerung nach Anspruch 1, dadurch *gekennzeichnet,* daß bei einem Stromausfall in Vorwärtsfahrt (Stellung D) vom Notfahrventil (8/9) die mit der zweiten Getriebeeingangswelle (12) verbundene Kupplung (E) mit Betätigungsdruck (Zuleitung 81, 82) beaufschlagt wird oder ist und eine Fahrt mit Leistungsteilung fortgesetzt werden kann, und daß eine Verstellung des Wählschiebers (4) in die Neutralstellung (N) und wieder in die Vorwärtsfahrtstellung (D) eine Umstellung des Notfahrventils (8/9) bewirkt, so daß über die Fahrkupplung (B) eine Vorwärtsfahrt über die hydrodynamische Einheit (2) und die erste Getriebeeingangswelle (11) und auch ein Anfahren möglich ist.

3. Elektro-hydraulische Steuerung nach Anspruch 1, dadurch *gekennzeichnet*, daß bei Stromausfall im Stand (Stellung N) mit der Verstellung des Wählschiebers (4) von Neutral (N) nach Vorwärts (D) über das Notfahrventil (8/9) die Rückwärtsgangkupplung (B) für das Anfahren und für eine Vorwärtsfahrt mit Betätigungsdruck (Zuleitung 81, 83) beaufschlagt wird und die Leistung vom Antriebsmotor (3) über die hydrodynamische Einheit (2) und die erste Getriebeeingangswelle (11) übertragen wird.

4. Elektro-hydraulische Steuerung nach Anspruch 1, dadurch *gekennzeichnet*, daß auch bei Stromausfall und bei Betätigung des Wählschiebers (41) in die Rückwärtsfahrt (Stellung R) immer über das Notfahrventil (8) die Rückwärtsfahrkupplung (B) und auch die Bremse (D) mit Betätigungsdruck beaufschlagt wird, und über die hydrodynamische Einheit (2) die Rückwärtsfahrt möglich ist.

5. Elektro-hydraulische Steuerung nach Anspruch 1, dadurch *gekennzeichnet*, daß das Notfahrventil (8/9) einen abgesetzten Kolbenschieber (9) mit drei Steuerkolben (91, 92, 93) gleichen Durchmessers auf der einen Seite und einen Steuerkolben (94) mit einem größeren Durchmesser und einen Anschlagbolzen (95) auf der anderen Seite hat und in einer abgesetzten zylindrischen Bohrung (86) axial verschiebbar gelagert ist, wobei Ringräume (87/88) im Zylinder (86) angeordnet sind, die mit den Steuerkolben (91 – 94) zusammenwirken, und daß eine Druckfeder (96), die in einem Federraum (89) um den Anschlagbolzen (95) herum angeordnet ist, und den Kolbenschieber (9) in die eine Endstellung mit dem kleineren Durchmesser des Steuerkolbens (91) drückt und in dieser Stellung einen Ringraum mit dem Steuerkolben (94) des größeren Durchmessers verschließt, in dem über Zuleitung (84) Systemdruck zugeführt wird, während eine Zuleitung (81) für den Betätigungsdruck (Systemdruck) die in den vierten Ringraum (87/4) führt über den fünften Ringraum (87/5) mit der Zuleitung (83) zur R-Gang-Kupplung (B) verbunden ist, so daß der Antrieb in dieser Stellung in Vorwärtsfahrtrichtung über die hydrodynamische Einheit (2) und die erste Getriebeeingangswelle (11) erfolgt, über den zweiten Kolben (92) ist der dritte Ringraum (87/3), der eine Zuleitung (82) zur Kupplung für den mechanischen Antrieb (E) hat, abgeschlossen, und diese Leitung ist über den zweiten Ringraum (87/2) entlüftet, wie auch der Federraum (89) und der sechste Ringraum (87/6), und in dieser Stellung auch der siebente Ringraum (88/1) entlüftet ist, der erste auch stirnseitige Ringraum (87/1) am kleineren Durchmesser vom Zylinder (86) und Kolbenschieber (9) ist über eine Steuerleitung (85) mit einem Magnetventil (6) verbunden, so daß der Kolbenschieber (9) über Druckmittel in eine rechte Endstellung gebracht werden kann und dort von dem Systemdruck (Zuleitung 84) über die Ringfläche (98) am großen Kolbendurchmesser (94) entgegen dem Druck der Feder (96) gehalten wird.

**Claims**

1. Electrohydraulic control system for an automatic transmission (1) comprising two primary shafts (11, 12), wherein the first shaft (11) is connected to the turbine (21) of a hydrodynamic unit, and the second shaft (12) is directly connected to the driving shaft (31) of the driving motor (3), and the driving power is transmitted to the reduced planetary gear train (14), depending on the gear, either separately or as divided power, and comprising a selector (4) at least for the neutral position (N) and for the forward drive (D) and reverse drive (R), an electronic control unit (5), solenoid valves (6) held in the neutral position by spring force, a fluid pressure source (7), pressure and shift valves and dampers for actuating gear shift clutches and brakes (A – E), characterised in that for operation an emergency valve (8/9) is also arranged between one solenoid valve (6) and the clutches for the highest gear (E) and the reverse gear (B), and in the event of failure of the solenoid valve (6), said emergency valve (8/9) is held in the shifted position by means of system pressure (line 84) coming from the selector (4), and acting upon an annular surface (98) of a piston valve (9).

2. Electrohydraulic control system according to claim 1, characterised in that in the event of power failure during forward drive (position D), actuating pressure (feed line 81, 82) is applied, via the emergency valve (8/9), to the clutch (E) connected to the second primary shaft (12), and driving can continue with divided power, and that the emergency valve (8/9) is adjusted by moving the selector (4) into the neutral position (N) and then back into the forward drive position (D), so that, via the external clutch (B), forward drive is still possible via the hydrodynamic unit (2) and the first primary shaft (11), and starting is also possible.

3. Electrohydraulic control system according to claim 1, characterised in that in the event of power failure at rest (position N), actuating pressure (feed line 81, 83) is applied, via the emergency valve (8/9), to the reverse clutch (B) for starting and for forward drive by adjusting the selector (4) from neutral (N) to forward drive (D), and the power from the driving motor (3) is transmitted via the hydrodynamic unit (2) and the first primary shaft (11).

4. Electrohydraulic control system according to claim 1, characterised in that also in the event of power failure and actuation of the selector (41) during reverse drive (position R), actuating pressure is applied to the reverse clutch (B) and also to the brake (D), again via the emergency valve (8), and reverse drive is possible via the hydrodynamic unit (2).

5. Electrohydraulic control system according to claim 1, characterised in that the emergency valve (8/9) has a shouldered piston valve (9) having three control pistons (91, 92, 93) of the same diameter on one side and a control piston (94) with a larger diameter and a stop pin (95) on the other side, and is axially slidably supported in a stepped cylindrical bore (86), wherein annular spaces (87/88) are arranged in the cylinder (86) and cooperate with the control pistons (91 − 94), and that a compression spring (96), which is arranged in a spring cavity (89) around the stop pin (95), pushes the piston valve (9) into one final position with the smaller diameter of the control piston (91), and in this position seals an annular space with the control piston (94) with the larger diameter, into which system pressure is introduced via the feed line (84), while a feed line (81) for the actuating pressure (system pressure) leading into the fourth annular space (87/4) is connected via the fifth annular space (87/5) with the feed line (83) to the reverse clutch (B), so that in this position forward drive is effected via the hydrodynamic unit (2) and the first primary shaft (11), the third annular space (87/3), which has a feed line (82) to the clutch for the mechanical drive (E), is sealed by means of the second piston (92), and this line is vented via the second annular space (87/2), as well as the spring cavity (89) and the sixth annular space (87/6), and in this position the seventh annular space (88/1) is also vented, the first annular space (87/1), which is also the front annular space, at the smaller diameter of the cylinder (86) and piston valve (9), is connected to a solenoid valve (6) via a control line (85), so that the piston-valve (9) can be brought into the correct final position by means of fluid pressure and is held there against the pressure of the spring (96) by the system pressure (feed line 84) via the annular surface (98) at the large piston diameter (94).

**Revendications**

1. Commande électro-hydraulique pour une transmission automatique (1) comportant deux arbres d'entrée de boîte de vitesses (11, 12) dont le premier (11) est raccordé à la turbine (21) d'une unité hydrodynamique et dont le second (12) est raccordé directement à l'arbre moteur (31) du moteur de traction (3), la puissance motrice étant introduite dans l'engrenage réducteur planétaire double (14) par une seule voie ou par un partage de la puissance, selon les rapports, la commande comportant un tiroir de sélection (4) au moins pour le point mort (N), la marche avant (D) et la marche arrière (R), ainsi qu'un appareil électronique de commande (5), des électrovannes (6) maintenues en position neutre par la force de ressorts, une source de fluide sous pression (7), des soupapes de retenue et de commande et des organes amortisseurs pour actionner des embrayages et freins (A − E) de changement de vitesses, caractérisée en ce qu'une soupape de secours (8/9) est montée en supplément et en liaison fonctionnelle entre une électrovanne (6) et les embrayages de commande du rapport le plus élevé (E) et de la marche arrière (B), et en ce que, en cas de panne de ladite électrovanne (6), la soupape de secours est maintenue en position enclenchée par une pression d'alimentation (conduite 84) qui vient du tiroir de sélection (4) et qui agit sur une surface annulaire (98) d'un tiroir à piston (9).

2. Commande électro-hydraulique selon la revendication 1, caractérisée en ce que, en cas de panne de courant en marche avant (position D), l'embrayage (E) raccordé au second arbre d'entrée de boîte (12) reçoit de la soupape de secours (8/9) une pression d'actionnement (conduite 81, 82) et qu'un parcours peut se poursuivre avec un partage de la puissance, et en ce qu'une manoeuvre du tiroir de sélection (4) jusqu'au point mort (N) puis jusqu'à la position de marche avant (D) provoque un changement de position de la soupape de secours (8/9) de façon à rendre possible, au moyen de l'embrayage de marche (B), une marche avant par l'unité hydrodynamique (2) et par le premier arbre d'entrée de boîte (11), ainsi qu'un démarrage.

3. Commande électro-hydraulique selon la revendication 1, caractérisée en ce que, en cas de panne de courant à l'arrêt (position N), un déplacement du tiroir de sélection (4) du point mort (N) à la position de marche avant (D) délivre, à travers la soupape de secours (8/9), une pression d'actionnement (conduite 81, 83) à l'embrayage de marche arrière (B) pour le démarrage et pour une marche avant, la puissance du moteur de traction (3) étant transmise à travers l'unité hydrodynamique (2) et le premier arbre d'entrée de boîte (11).

4. Commande électro-hydraulique selon la revendication 1, caractérisée en ce que, même en cas de panne de courant et d'actionnement du tiroir de sélection (41) jusqu'à la position de marche arrière (position R), la pression d'actionnement est toujours délivrée par la soupape de secours (8) à l'embrayage de marche arrière (B) ainsi qu'au frein (D), la marche arrière étant possible au moyen de l'unité hydrodynamique (2).

5. Commande électro-hydraulique selon la revendication 1, caractérisée en ce que la soupape de secours (8/9) comporte un tiroir étagé (9) ayant trois pistons de commande (91, 92, 93) de même diamètre d'un côté et un piston de commande (94) de plus grand diamètre et une tige de butée (95) de l'autre côté, et est monté de manière à pouvoir coulisser axialement dans un alésage cylindrique étagé (86), ce cylindre (86) comportant des chambres annulaires (87/88) qui coopèrent avec les pistons de commande (91 – 94), et en ce qu'un ressort de compression (96), disposé autour de la tige de butée (95) dans une chambre à ressort (89), pousse le tiroir de sélection (9) vers une première position extrême du côté du plus petit diamètre du piston de commande (91) et ferme dans cette position, par le piston de commande (94) de plus grand diamètre, une chambre annulaire dans laquelle la pression d'alimentation est amenée par une conduite (84), tandis qu'une conduite (81) pour la pression de commande (pression d'alimentation), conduisant à la quatrième chambre annulaire (87/4), est reliée par la cinquième chambre annulaire (87/5) à la conduite (83) allant à l'embrayage de marche arrière (B), de sorte que dans cette position l'entraînement en marche avant se fait par l'unité hydrodynamique (2) et le premier arbre d'entrée de boîte (11), que le second piston (92) ferme la troisième chambre annulaire (87/3) pourvue d'une conduite (82) d'alimentation de l'embrayage pour l'entraînement mécanique (E), et que cette conduite est déchargée par la deuxième chambre annulaire (87/2), de même que la chambre à ressort (89) et la sixième chambre annulaire (87/6), et que, dans cette position, la septième chambre annulaire (88/1) est déchargée, la première chambre annulaire (87/1), située en position frontale du côté du plus petit diamètre du cylindre (86) et du tiroir à piston (9), est reliée à une électrovanne (6) par une conduite de commande (85), de sorte que le tiroir à piston (9) peut être amené par le fluide sous pression dans une position extrême à droite et est maintenu dans cette position par la pression d'alimentation (conduite 84) agissant sur la surface annulaire (98) du piston de grand diamètre (94) à l'encontre de la pression du ressort (96).

FIG.1

|        | A | B | C | C' | D | E |
|--------|---|---|---|----|---|---|
| G.1    | X |   |   |    | X |   |
| G.2    | X |   | X | X  |   |   |
| G.3    | X |   | X |    |   | X |
| G.4    |   |   | X | X  |   | X |
| G.R    |   | X |   |    | X |   |
| NOT.G.3| X |   | X |    |   | X |
|        | X | X | X |    |   |   |

FIG.2

# FIG.3